# EUROPEAN PATENT SPECIFICATION

(11) **EP 4 130 582 B1**
(45) Date of publication and mention of the grant of the patent: **30.04.2025**
(21) Application number: 22187941.4
(22) Date of filing: 29.07.2022
(51) Int. Cl.: F24D 3/08, F28D 20/00

(54) **A SYSTEM AND METHOD FOR ACHIEVING STRATIFICATION IN A HOT WATER TANK**
SYSTEM UND VERFAHREN ZUM ERREICHEN EINER STRATIFIZIERUNG IN EINEM HEISSWASSERTANK
SYSTÈME ET PROCÉDÉ PERMETTANT D'OBTENIR UNE STRATIFICATION DANS UN RÉSERVOIR D'EAU CHAUDE

(30) Priority: 02.08.2021 BE 202105613
(43) Date of publication of application: 08.02.2023
(73) Proprietor: Daikin Europe N.V., 8400 Oostende (BE)
(72) Inventor: COESSENS, Tim, 8400 Oostende (BE); AMEEL, Bernd, 8400 Oostende (BE); RAMIREZ LASTRA, Monica, 8400 Oostende (BE)
(74) Representative: Brantsandpatents bv

(56) References cited:
- EP-A1- 2 698 584
- EP-A2- 0 928 940
- WO-A1-2020/196654
- JP-A- 2011 127 856
- US-A1- 2017 023 263

## Description

### FIELD OF INVENTION

The present invention relates to systems and methods of filling hot water tanks. In particular, the present invention relates to a system and method of filling a hot water tank having multiple water strata with different temperatures.

### BACKGROUND

Hot water tanks are broadly used in domestic applications as thermal and energy storage systems. To achieve high performance during the use of domestic hot water, and better energy and thermal storage capacity, it is necessary to have a highly stratified tank. Hot-water stratified storage tanks are widely known. They serve as far as possible to prevent mixing of hotter and colder water components when loading the storage tank. In this way, heat energy is maintained at the highest possible temperature and thus can be used efficiently.

In this context, stratification is understood as the occurrence and maintenance of adjacent, vertically distributed masses of water of different temperature and density. In a stratified tank, a cold layer of water is present at the bottom of the tank by virtue of its higher density. In the same stratified tank, a hot water layer is present at the top of the water column due to its lower density. These two water layers are separated by a medium temperature middle layer commonly referred to as thermocline.

As is typical of its function, a domestic water tank is subject to introduction and extraction of water. This water, either supplied or extracted, can range from cold to hot. It is particularly advantageous if warm water can be directly introduced within the warm water layer already present within the water tank. This permits, though not limited to, a faster availability of hot water. In a similar way, it is advantageous to introduce cold water within the cold water layer inside the water tank.

Japanese patent application JPS5986847A discloses a conventional hot water storage tank with a means for storing hot water with little turbulence, which comprises two bowl-shaped means arranged in opposite directions and one inside the other. This will expand the hot water flow.

Since in a stratified storage tank the water introduced in the vicinity of the layer corresponding to the inlet temperature rises or descends due to temperature-dependent density differences and thus reaches the layer at the same temperature, particularly high requirements are placed on storage free of turbulence in stratified storage tanks.

Known stratified charge storage tanks or stratified storage tanks, which are known for example from DE8310135U1, have a storage tank filled with water, in which, due to the different density, a stratification is created between the warm water located in the upper area of the storage tank and the cold water located in the lower area. To charge the stratified storage tank, a charging circuit with a circulation pump is provided, the cooler water being conveyed from the lower area of the stratified storage tank to a heat exchanger, where it is heated and the heated water is fed back into the upper area of the storage tank. For consumption, the warm water is taken from the storage tank in the upper area as process water and replaced by cold water supplied below. Other examples can be found in US2017023263, WO2020196654. US '263 discloses a hot water supply system including a liquid heater for heating a liquid, a liquid-water heat exchanger, a water-heating circuit in which the liquid is circulated between the liquid heater and the liquid-water heat exchanger. A lower outward path for leads water from a lower part of a hot water storage tank to the liquid-water heat exchanger, the upper return path for leading the water from the liquid-water heat exchanger to an upper part of the hot water storage tank, a middle outward path for leading the water from a middle part of the hot water storage tank to the liquid-water heat exchanger, a middle return path for leading the water from the liquid-water heat exchanger to a middle part of the hot water storage tank. WO '654 discloses a hot water storage state in which a low-temperature layer, a medium-temperature layer, and a high-temperature layer are formed in a tank, a first hot water supply operation is executed in which water in the medium-temperature layer is heated to a first temperature by a heating unit and supplied to a hot water destination through a hot water supply flow path.

From DE 3835096C1 a stratified storage tank with a storage tank with a hot water supply in the upper section and a cold water supply and cold water extraction point in the bottom area is already known. The hot water supply has a flow guide device in the form of a guide tube, which brings the supplied hot water of the loading circuit into the depth of the storage tank by means of an elongated entry zone. At the cold water tap or cold water supply line In the bottom area of the storage tank, a water connection piece is provided with a cup-shaped flow braking device. The aim of these measures is to ensure that there are largely only laminar and turbulence-free flows within the storage tank and that the flow speeds remain limited so that the flow does not develop an injector effect through which colder water can be carried away into the upper storage volume area or, conversely, hot water in the lower storage volume area could be promoted.

Neither the guide device at the hot water inlet by means of the guide pipe nor the flow brake at the cold water inlet or at the cold water extraction point ensure that a radial component of the flow distributes the water supplied evenly over the entire circumference.

JP2011127856 discloses a storage type hot water supply device including a reboiling control means which decides a boiling-up target temperature in re-boiling by a heating means in time zones except a late-night time zone and causes re-boiling operation to be performed in the time zones except the late-night time zone. After reheating bathtub water, a previously set predetermined high temperature is used as a boiling-up target temperature, and in re-boiling operation, a switching means is switched to an intermediate return pipe side so that hot water heated to a high temperature by the heating means is returned to a hot water tank intermediate part.

EP2698584 discloses a pressure less accumulator for district heating systems, comprising a tank connected to at least one heat emitting system and at least one heat absorbing system. The tank comprises a lid, a bottom section and a top section. The bottom section comprises at least one first bottom inlet/outlet. The tank further comprises a partition wall arranged between the bottom section and the top section for the purpose of dividing the tank in a first compartment arranged above the partition wall and a second compartment arranged beneath the partition wall. The first compartment and the second compartment are in fluid communication with each other by at least one conduit. The first compartment comprises a first heat transfer medium and the second compartment comprises a second heat transfer medium. The second compartment further comprises a first top inlet/outlet arranged in the top of the second compartment.

EP0928940A2 discloses a water heater baffle comprising an inlet and an outlet for the passage of water there through, wherein that the baffle arrangement forces the water entering the baffle through a labyrinth before exiting the baffle in a direction substantially 90° to its general flow of entry into the baffle.

The aforementioned concepts and embodiments present a number of approaches to achieve stratification inside a water tank. However, the devices and methods of achieving stratification disclosed in these documents are directed at dispensing only hot water. Furthermore, the abovementioned devices and methods do not consider if the temperature of the water introduced into the tank is sufficiently high such that effective stratification can be attained/preserved. This aspect greatly limits the scope of use of the concerned devices.

The way in which hot water is produced to load the tank and differences in domestic water consumption between households make it particularly necessary to be able to control the volume of each water layer included in the stratified water column within a water tank. It is therefore an important aspect of the performance of a water storage tank to be able to create, store and provide adequate volumes of water at different temperatures, and to do so in an energetically efficient way.

The present invention aims to resolve at least some of the problems and disadvantages mentioned above.

### SUMMARY OF THE INVENTION

The present invention and embodiments thereof serve to provide a solution to one or more of the above-mentioned disadvantages. To this end, the present invention relates to a system, which comprises a tank having multiple water strata with different temperatures according to claim 1.

It is an object of the present invention to make available a system which permits, compared to similar devices in prior art, a much improved stratification of water contained in a water tank. Said tank being further configured to be connected to a domestic water network.

It is a particular object of the invention to make available a system which more than superior stratification, permits a much advantageous and superior control over the stratification process. In particular, it is possible to adjust the volume of the water layers included in the stratified water column contained in the water tank.

It is a further object of the invention to make available a method of achieving a much superior stratification, which method makes use of the superior stratification capabilities and enhanced control enabled by the aforementioned system. In particular, said method permits a plurality of approaches to achieving improved stratification. in a far more efficient use of energy in order to attain said stratification.

According to an aspect of the invention, a system is made available, which system comprises a tank, a heat exchanger and a heating circuit encompassing said first two elements. Also, the tank has a plurality of inlets and outlets. In particular, the system is connected to the heating circuit configured to provide a fluid connection between an outlet of the heat exchanger and any one of the inlets and configured to provide a fluid connection between an inlet of the heat exchanger and any one of the outlets. Furthermore, the system is configured to be connected to a domestic water network via a plurality of outlets positioned along the height of the water tank. This permits, advantageously, direct access to different water layers within the tank, each of said water layers having a different temperature.

According to a second aspect of the invention, a method of achieving stratification is made available. Said method permitting multiple approaches to yielding superior stratification results and much enhanced efficiency.

### FIGURES

Figure 1 illustrates an embodiment of the tank-type system and all the elements of said system.
Figure 2 illustrates an embodiment the first heating cycle.
Figure 3 illustrates an embodiment of a second heating cycle.
Figure 4 illustrates an embodiment of an alternative second heating cycle.

### DETAILED DESCRIPTION

The present invention concerns a method of filling a hot water tank having multiple water strata with different temperatures.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

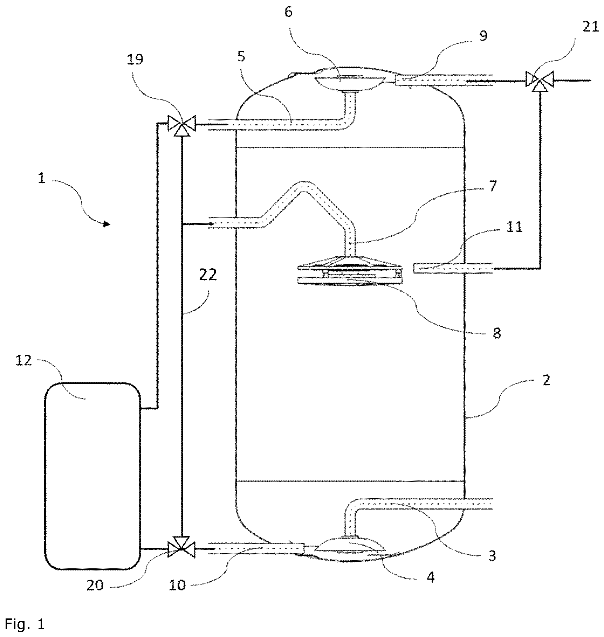

In a first aspect, the invention relates to a vastly improved system (1) suitable for receiving, storing and supplying water as illustrated in Fig. 1 to Fig. 4, said system (1) comprising:
a tank (2) having a first and a second outlets (10, 7) to supply water in the tank (2) to a heat exchanger (12), and a first and a second inlets (7, 5) to return water heated by the heat exchanger (12) to the tank (2), and a third inlet (3) to introduce tap water to the tank (2), and a third outlet and fourth outlet (9, 11) to supply domestic hot water, and configured to hold water for domestic use, said tank (2) comprising a bottom section, a top section and a middle section, and configured to the first outlet (10) and third inlet (3) to be located in the bottom section, the first inlet (7), second outlet (7) and fourth outlet (11) to be located in the middle section, and the second inlet (5) and the third outlet (9) to be located in the top section, and a heat exchanger (12) equipped with an inlet configured to receive water in the tank (2) and an outlet configured to supply said water to the tank, and a heating circuit configured to provide a fluid connection between the outlet of the heat exchanger (12) and either the first inlet (7) or the second inlet (5), and configured to provide a fluid connection between the inlet of the heat exchanger and either the first outlet (10) or the second outlet (7).

The presence of multiple inlets at different heights permits, advantageously, the injection of water having a temperature, which temperature is different than that of the water already present inside the tank (2). In this way, the temperature of specific volumes of water inside the tank can be modified by injecting water having a specific temperature. The capability of modifying the temperature of predetermined volumes of water inside the tank (2) permits, advantageously, the stratification of the water volume contained in said tank (2).

In this context, the terms "stratification" and "stratified" define, respectively, the action and state of separation of a water column into different layers having different temperatures. Each of said layers having a substantially uniform temperature. In this context, "turbulence" is defined as a fluid motion characterized by chaotic changes in pressure and flow velocity. Vortices are a major component of a turbulent flow. The terms "vortex" or "vortices" are defined as regions of a fluid in which the flow revolves around an axial line, which line can be either straight or curved.

In this context "outlet" is understood as any connection which permits water to be extracted from the tank. In this context "inlet" is understood as any connection which permits water to be injected into the tank.

According to a further or another embodiment, the heating circuit further comprising a first 3-way valve (20), second 3-way valve (19) and a bypass pipe (22), wherein the first 3-way (20) valve is fluidly connected to the first outlet (10), the inlet of the heat exchanger (12) and one of the end of the bypass pipe (22), and, the second 3-way valve (19) is fluidly connected to the second inlet (5), the outlet of the heat exchanger (12) and the other end of the bypass pipe (22), and, the second outlet (7) and the first inlet (7) is fluidly connected to the middle of the pipe.

The first and second 3-way valves (20, 19) permit, advantageously, the extraction of water from the second outlet (7) and first outlet (7) of the tank, which water can then be heated and reintroduced into the tank (2). Said 3-way valves (19, 20) permits also, advantageously, the reintroduction of said water after heating and into the tank (2) via either the first inlet (7) or the second inlet (5).

According to a further or another embodiment, the system (1) further includes a controller, said controller controls the first 3-way valve (20) and the second 3-way valve (19). Said controller permits, advantageously, the clear definition of heating cycles and their management. This permits, very advantageously, to optimize the heating cycles according to consumption patterns, state of the water inside the tank (2), and such that energy used to heat the water in the tank is more efficiently used.

Any vortices occurring at or near the middle section of the water tank (2) are particularly harmful to the formation and maintenance of stratification since separation between layers of water having different temperature often occurs in this middle section. It is therefore considerably advantageous to avoid the formation of vortices in the middle section of the tank (2). To this end and according to a further embodiment, the first inlet (7) is further equipped with a diffuser. In a further embodiment, a diffuser is disposed in to the third inlet (3). In this way, introduction of vortices in the middle section of the tank (2) is advantageously avoided, thus preventing destruction of any existing stratification.

According to a further or another embodiment, a diffuser is disposed to at least the first inlet (7), the second inlet (5) and third inlet (3). Preferably, said diffusers are disposed to each of the first inlet (7), the second inlet and third inlet (3). This permits an advantageous mitigation of turbulence and velocity of the water being injected into the tank (2). In this way, disturbance of the limits between water layers is advantageously minimized.

In the present context, "diffuser" is to be understood as a device mounted and/or extending from a pipe section, and configured to reduce the speed of water admitted into said diffuser, with said water then being discharged from the said diffuser.

According to a further or another embodiment, a plurality of diffusers comprising a first bowl shape diffuser (4) and a second bowl shape diffuser (6), and the first bowl shape diffuser (4) is located close to the bottom of the tank (2) and so that an open side of the bowl shape is downwards and the axial direction of the first bowl shape diffuser (4) is vertical, and the second bowl shape diffuser (6) is located close to an upper wall of the tank (2) and so that an open side of the bowl shape is upwards and the axial direction of the second bowl shape diffuser (6) is vertical. By preference the first bowl shape diffuser (4) is disposed to the third inlet (3) and the second bowl shape diffuser (6) is disposed in the second inlet (5). In this way, the water injected into the tank (2) through any of the bowl shaped diffusers (5, 6) has a lower velocity and which water is uniformly distributed around said diffusers and along the inner surface of the tank (2). In this way, the water injected into the tank (2) flows in a substantially horizontal direction, thereby avoiding disturbing the limits of the water layers where it is injected. In the present embodiment, an example in which the first bowl shape diffuser (4) and the second bowl shape diffuser (6) are disposed to both the third inlet (3) and the second inlet (5), respectively, is described. But the first bowl shape diffuser (4) or the second bowl shape diffuser (6) may be disposed to either the third inlet (3) or the second inlet (5). Furthermore, even when neither the first bowl shape diffuser (4) or the second bowl shape diffuser (6) are disposed to both the third inlet (3) and the second inlet (5), the present embodiment makes available a system which permits, compared to similar devices in prior art, a much improved stratification of water contained in the water tank.

According to a further or another embodiment, the diffusers further comprising a third diffuser (8), and the third diffuser (8) is located in the middle section of the tank, said third diffuser (8) being preferably disposed to the first inlet. Said third diffuser (8)comprises a first disk equipped with an center inlet and a second similar sized, preferably equal sized disk to be placed parallel to the first disk, said disks being spaced apart by a plurality of struts extending towards said disks, and a substantially cylindrical space defined by said parallel arranged disks into which water admitted through the central inlet of the first disk flows and from which said water is radially discharged through the radial outlet between the two disks; characterized in that, a plurality of parallel arranged deflection elements vertically extending from one or both disks, said deflection elements being contained within the cylindrical space between the disks.

In this way, the water injected into the tank (2) through the third diffuser (8) has a lower velocity and which water is uniformly distributed around said diffuser in a substantially horizontal direction. This permits, advantageously, to introduce water into the tank (2) with minimal disturbance to the limits of the water layers where said water is injected.

According to a further or another embodiment, the second outlet (7) and the first inlet (7) are the same. In this way, assembly of the system is greatly simplified, thereby decreasing unit costs. Furthermore, by combining the second outlet (7) and the first inlet (7), fewer cuts in the insulation of the tank (2) are necessary, thereby allowing for better preservation of the energy contained within the tank (2). Also, since the second outlet (7) and the first inlet (7) are the same, to dispose the third diffuser at the first inlet means to dispose the third diffuser at the second outlet. That is, the third diffuser can be said to have both the functions of an inlet of water flowing into the tank (2) and an outlet of water flowing out of the tank (2). The third diffuser functions as a water inlet or water outlet. If the third diffuser is a water inlet, the water flows into a substantially cylindrical space defined by said parallel arranged disks from the central inlet of the first disc, and the water is discharged through the radial outlet between the two discs. If the third diffuser is a water outlet, the water flows into a substantially cylindrical space defined by said parallel arranged disks from the radial inlet between the two discs, and the water is discharged from the central outlet of the first disc. In the embodiment described above, an example in which the first bowl shape diffuser (4) and the second bowl shape diffuser (6) are respectively disposed to both the third inlet (3) and the second inlet (5) is described. Furthermore, the third diffuser may be configured to be disposed at the first inlet/second outlet. In this embodiment, a system makes available a system which permits, compared to similar devices in prior art, a much improved stratification of water contained in the water tank. However, only the third diffuser may be disposed to the first inlet/second outlet. In this case also, a system makes available a system which permits, compared to similar devices in prior art, an improved stratification of water contained in the water tank.

According to a further or another embodiment, the system is provided with a third 3-way valve (21), wherein the third 3-way valve is fluidly connected to the third outlet (9), the fourth outlet (11) and the end of a supply pipe for DHW, and is configured to mix the water from the third outlet (9) with the water from the fourth outlet (11) if needed.

In this context, "DHW" is an abbreviation for "Domestic Hot Water". The third 3-way valve permits, advantageously, modulation of the flow of the water extracted from the third outlet (9) and the water from the fourth outlet (11). In this way, a broad range of temperatures is made available for consumption. Furthermore, by providing access to water coming from the fourth outlet (11), water having a medium temperature is made available without depleting the hot water layer (15). In this way, the energy contained in the system is, advantageously, better preserved.

By preference, each inlet and outlet located in each section are located at the same height. In this way, it is possible to access water at substantially the same temperature at which said water is injected into the tank.

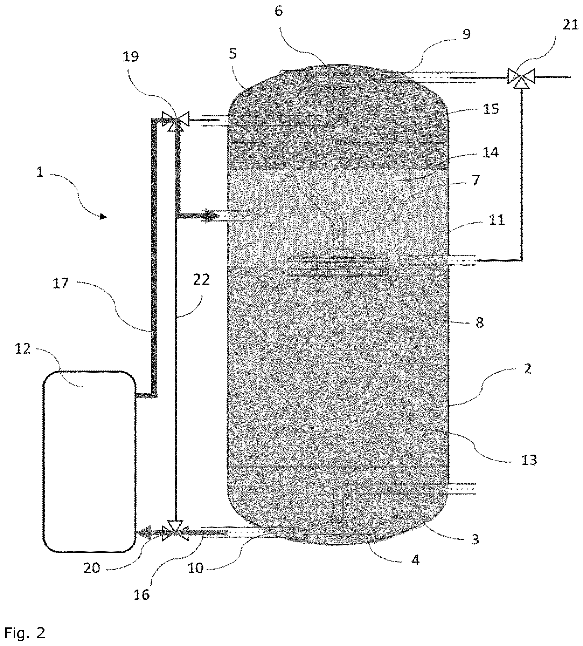

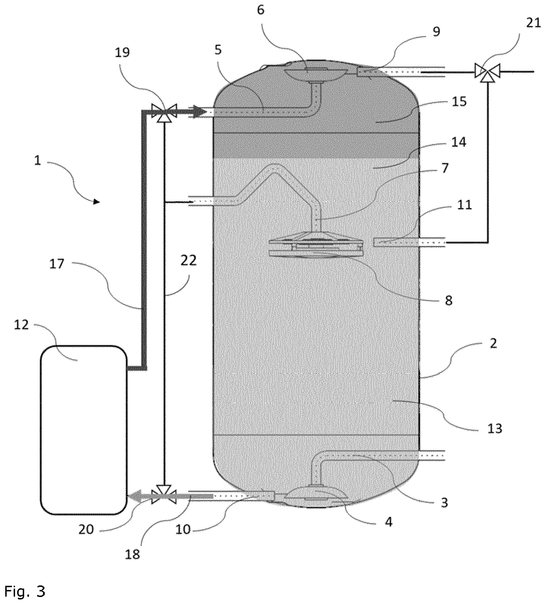

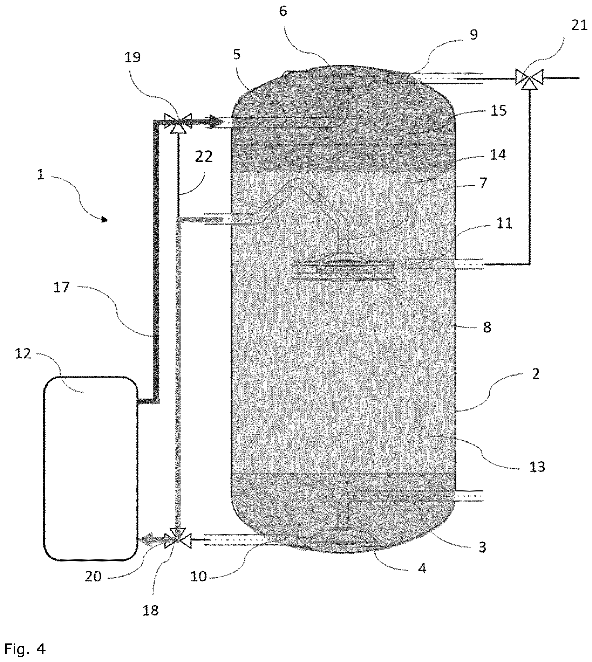

The present invention is also reached by method for achieving stratification inside a water tank (2), said method comprising a first heating cycle as illustrated in Fig. 2. In said heating cycle cold water is extracted from a cold water layer (13), through the first outlet (10). Said cold water flow (16) is further directed by means of the first 3-way valve (20) towards the inlet of the heat exchanger (12). Said cold water flow (16) is heated inside the heat exchanger (12), from which said water is dispensed as a hot water flow (17). Said water flow is further directed by means of the second 3-way valve (19) towards the second outlet/first inlet (7), through the third diffuser (8) and into tank (2) where it is allowed to mix with cold water at the top of cold water layer (13). By virtue of this hot water flow (19) into the middle section of tank (2), a medium temperature water layer (14) is formed and/or augmented. Said methods also include two alternative second heating cycles, one illustrated in Fig. 3 and the other in Fig.4. Either one of these second heating cycles includes the extraction of medium temperature water from the tank (2), heating said medium temperature water and introducing said heated water into the top section of the tank, thereby creating a layer of hot water (15).

The medium temperature layer created by using the aforementioned method advantageously provides a buffer between any bottom cold water layer (13) and any top hot water layer. Furthermore, the introduction of hot water near the top of the tank (2) during the second heating cycle advantageously permits the immediate creation and/or increase of a top hot water layer (15). The introduction of hot water always on top of colder layers advantageously avoids the creation buoyancy forces resulting from injecting a lower density fluid into or below a higher density fluid. This advantageously permits a faster stratification of the water inside the tank (2).

In a further or another embodiment of the invention, the first heating cycle is maintained until no more cold water remains at the bottom of the tank (2), resulting in the situation illustrated in Fig. 3. This permits the extraction of medium temperature water (18) through either the first outlet (10) or second outlet (7) during the second heating cycle.

In the embodiment illustrated in Fig.3, during the second heating cycle, water having a medium temperature is then extracted from the medium temperature water layer (14) through the first outlet (10). The medium temperature water flow 18 leaving the tank (2) through the first outlet (10) is then directed by the first 3-way valve (20) towards and into the inlet of the heat exchanger (12). Inside said heat exchanger (12), medium temperature water flow (18) is heated and dispensed through the hot water outlet of heat exchanger (12) as a hot water flow (17). Said hot water flow is subsequently directed by the second 3-way valve (19) towards second inlet (5). Said hot water flow (17) then enters the tank (2), where it creates and/or enlarges a hot water layer (15). In this way, a higher volume of hot water can be made available as the cold water layer (13) at the bottom of the tank has been depleted and turned into warm water.

In an alternative embodiment of the second heating cycle as illustrated in Fig.4, a cold water layer (13) may still be preserved at the bottom of the tank (2). Water having a medium temperature is extracted from the medium temperature water layer (14) through the third diffuser (8) and subsequently through second outlet/first inlet (7). The medium temperature water flow (18) leaving the tank (2) through the second outlet/first inlet (7) is then blocked by the second 3-way valve (19) and directed by the first 3-way valve (20) towards and into the inlet of the heat exchanger (12). Inside said heat exchanger (12), medium temperature water flow (18) is heated and dispensed through the outlet of heat exchanger (12) as a hot water flow (17). Said hot water flow is subsequently directed by the second 3-way valve (19) towards the second inlet (5). Said hot water flow (17) then enters the tank (2), where it creates and/or enlarges a hot water layer (15). In this way, at least three layers of water (13, 14, 15) are preserved in the tank (2), which permit, advantageously, immediate access to cold, hot and medium temperature water.

### List of numbered items

- 1: system
- 2: tank
- 3: third inlet for tap water
- 4: first bowl shape diffuser
- 5: second inlet
- 6: second bowl shape diffuser
- 7: second outlet/first inlet
- 8: third diffuser
- 9: third outlet
- 10: first outlet
- 11: fourth outlet
- 12: heat exchanger
- 13: cold water layer
- 14: medium temperature water layer
- 15: hot water layer
- 16: cold water flow
- 17: hot water flow
- 18: medium temperature water flow
- 19: second 3-way valve
- 20: first 3-way valve
- 21: third 3-way valve
- 22: bypass pipe

## Claims

1. A system (1) suitable for receiving, storing and supplying water, said system (1) comprising:
a tank (2) having a first and a second outlets (10, 7) to supply water in the tank (2) to a heat exchanger (12), and a first and a second inlets (7, 5) to return water heated by the heat exchanger (12) to the tank (2), and a third inlet (3) to introduce tap water to the tank (2), and a third outlet and fourth outlet (9, 11) to supply domestic hot water, and configured to hold water for domestic use, said tank (2) comprising a bottom section, a top section and a middle section and configured to the first outlet and third inlet (10, 3) to be located in the bottom section, the first inlet (7), second outlet (7) and fourth outlet (11) to be located in the middle section, and the second inlet (5) and the third outlet (9) to be located in the top section, and
a heat exchanger (12) equipped with an inlet configured to receive water in the tank (2) and an outlet configured to supply said water to the tank (2),
a heating circuit configured to provide a fluid connection between the outlet of the heat exchanger (12) and either the first inlet or the second inlet (7, 5), and configured to provide a fluid connection between the inlet of the heat exchanger (12) and either the first outlet (10) or the second outlet (7), the system (1), further comprising a plurality of diffusers comprising a first bowl shape diffuser (4) and a second bowl shape diffuser (6), and the first bowl shape diffuser (4) is located close to the bottom of the tank (2) and so that an open side of the bowl is downwards and the axial direction of the first bowl shape diffuser (4) is vertical, and the second bowl shape diffuser (6) is located close to an upper wall of the tank (2) and so that an open side of the bowl is upwards and the axial direction of the second bowl shape diffuser (6) is vertical, and the first bowl shape diffuser (4) is disposed to the third inlet (3) and the second bowl shape diffuser (6) is disposed in the second inlet (5).

2. A system (1) according to claim 1, said heating circuit further comprising a first 3-way valve (20), second 3-way valve (19) and a bypass pipe (22), wherein the first 3-way valve (20) is fluidly connected to the first outlet (10), the inlet of the heat exchanger (12) and one of the ends of the bypass pipe (22), and,
the second 3-way valve (19) is fluidly connected to the second inlet (5), the outlet of the heat exchanger (12) and the other end of the bypass pipe (22), and,
the second outlet (7) and the first inlet (7) is fluidly connected to the middle of the bypass pipe (22).

3. A system (1) according to claim 2, further comprising a controller, said controller controls the first 3-way valve (20) and the second 3-way valve (19).

4. A system (1) according to any claim 1-3, further comprising a third diffuser (8), and the third diffuser (8) is located in the middle section of the tank (2) and is disposed to the first inlet (7) and comprises:
a first disk equipped with a center inlet and
a second similar sized, preferably equal sized disk to be placed parallel to the first disk, said disks being spaced apart by a plurality of struts extending towards said disks, and;
a substantially cylindrical space defined by said parallel arranged disks into which water admitted through the central inlet of the first disk flows and from which said water is radially discharged through the radial outlet between the two disks;
**characterized in that**, a plurality of parallel arranged deflection elements vertically extending from one or both disks, said deflection elements being contained within the cylindrical space between the disks.

5. A system (1) according to any one of claims 1 to 4, the second outlet (7) and the first inlet (7) are the same.

6. A system (1) according to claim 5, the third diffuser (8) functions as a water inlet or water outlet.

7. A system (1) according to any one of claims 1 to 6, further comprising
a third 3-way valve (21), wherein the third 3-way valve (21) is fluidly connected to the third outlet (9), the fourth outlet (11) and the end of a supply pipe for DHW, and is configured to mix the water from the third outlet (9) with the water from the fourth outlet (11).

8. A system (1) according to claim 7, wherein each inlet and outlet located in each section are located at the same height.

9. A method for achieving stratification inside a water tank (2) of a system according to any of claims 1 to 8, said method comprising:
a first heating cycle, said heating cycle including the extraction of cold water from the bottom of the tank (2), heating of said water and introducing said heated water into the middle section of the tank (2), thereby creating a layer of medium temperature water (14), the first heating cycle is maintained until no more cold water remains at the bottom of the tank (2);
a second heating cycle, said heating cycle including the extraction of medium temperature water from the tank (2), heating said medium temperature water and introducing said heated water into the top section of the tank (2), thereby creating a layer of hot water (15), the medium temperature water is extracted from the tank (2) through an outlet next to the bottom of the tank (2) or the middle section of the tank (2).

## Patentansprüche

1. System (1), das zum Aufnehmen, Speichern und Zuführen von Wasser geeignet ist, wobei das System (1) Folgendes umfasst:
einen Tank (2) mit einem ersten und einem zweiten Auslass (10, 7) zum Führen von Wasser in dem Tank (2) zu einem Wärmetauscher (12) und mit einem ersten und einem zweiten Einlass (7, 5) zum Rückführen von durch den Wärmetauscher (12) erwärmtem Wasser zu dem Tank (2) und einem dritten Einlass (3) zum Einführen von Leitungswasser in den Tank (2) und einem dritten Auslass und vierten Einlass (9, 11) zum Zuführen von Warmwasser, und der dafür gestaltet ist, Wasser zum Haushaltsgebrauch vorzuhalten, wobei der Tank (2) einen unteren Abschnitt, einen oberen Abschnitt und einen mittleren Abschnitt umfasst und so gestaltet ist, dass der erste Auslass und der dritte Einlass (10, 3) in dem unteren Abschnitt liegen, der erste Einlass (7), der zweite Auslass (7) und der vierte Auslas (11) in dem mittleren Abschnitt liegen und der zweite Einlass (5) und der dritte Auslass (9) in dem oberen Abschnitt liegen, und
einen Wärmetauscher (12), der mit einem Einlass versehen ist, der dafür gestaltet ist, Wasser in dem Tank (2) aufzunehmen, und mit einem Auslass, der dafür gestaltet ist, Wasser zu dem Tank (2) zu führen,
einen Heizkreis, der dafür gestaltet ist, eine Fluidverbindung zwischen dem Auslass des Wärmetauschers (12) und entweder dem ersten Einlass oder dem zweiten Einlass (7, 5) bereitzustellen, und dafür gestaltet ist, eine Fluidverbindung zwischen dem Einlass des Wärmetauschers (12) und entweder dem ersten Auslass (10) oder dem zweiten Auslass (7) bereitzustellen, wobei das System (1) ferner mehrere Diffuser umfasst, die einen ersten wannenförmigen Diffuser (4) und einen zweiten wannenförmigen Diffuser (6) umfassen und der erste wannenförmige Diffuser (4) nahe dem Boden des Tanks (2) und derart liegt, dass eine offene Seite der Wanne nach unten weist und die axiale Richtung des ersten wannenförmigen Diffusers (4) vertikal ist, und der zweite wannenförmige Diffuser (6) nahe einer oberen Wand des Tanks (2) und derart liegt, dass eine offene Seite der Wanne nach oben weist und die axiale Richtung des zweiten wannenförmigen Diffusers (6) vertikal ist, und der erste wannenförmige Diffuser (4) an dem dritten Einlass (3) angeordnet ist und der zweite wannenförmige Diffuser (6) in dem zweiten Einlass (5) angeordnet ist.

2. System (1) nach Anspruch 1, wobei der Heizkreis ferner ein erstes 3-Wege-Ventil (20), ein zweites 3-Wege-Ventil (19) und ein Umgehungsrohr (22) umfasst, wobei das erste 3-Wege-Ventil (20) in Fluidverbindung mit dem ersten Auslass (10), dem Einlass des Wärmetauschers (12) und einem der Enden des Umgehungsrohrs (22) steht, und
das zweite 3-Wege-Ventil (19) in Fluidverbindung mit dem zweiten Einlass (5), dem Auslass des Wärmetauschers (12) und dem anderen Ende des Umgehungsrohrs (22) steht, und
der zweite Auslass (7) und der erste Einlass (7) in Fluidverbindung mit der Mitte des Umgehungsrohrs (22) stehen.

3. System (1) nach Anspruch 2, ferner eine Steuerung umfassend, wobei die Steuerung das erste 3-Wege-Ventil (20) und das zweite 3-Wege-Ventil (19) steuert.

4. System (1) nach einem der Ansprüche 1 bis 3, ferner einen dritten Diffuser (8) umfassend, und wobei der dritte Diffuser (8) im mittleren Abschnitt des Tanks (2) liegt und an dem ersten Einlass (7) angeordnet ist und Folgendes umfasst:
eine erste Scheibe, die mit einem mittigen Einlass versehen ist, und
eine zweite Scheibe von ähnlicher Größe, vorzugsweise von gleicher Größe, die parallel zu der ersten Scheibe anzuordnen ist, wobei die Scheiben durch mehrere Streben voneinander beabstandet sind, die sich zu den Scheiben erstrecken, und
einen im Wesentlichen zylindrischen Raum, der durch die parallel angeordneten Scheiben definiert ist und in den Wasser fließt, das durch den mittigen Einlass der ersten Scheibe eingelassen wird, und aus dem Wasser radial durch den radialen Auslass zwischen den zwei Scheiben ausgestoßen wird,
**dadurch gekennzeichnet, dass** sich mehrere parallel angeordnete Umlenkelemente vertikal von einer oder beiden Scheiben erstrecken, wobei die Umlenkelemente innerhalb des zylindrischen Raums zwischen den Scheiben enthalten sind.

5. System (1) nach einem der Ansprüche 1 bis 4, wobei der zweite Auslass (7) und der erste Einlass (7) identisch sind.

6. System (1) nach Anspruch 5, wobei der dritte Diffuser (8) als Wassereinlass oder Wasserauslass fungiert.

7. System (1) nach einem der Ansprüche 1 bis 6, ferner umfassend:
ein drittes 3-Wege-Ventil (21), wobei das dritte 3-Wege-Ventil (21) in Fluidverbindung mit dem dritten Auslass (9), dem vierten Auslass (11) und dem Ende eines Zuführungsrohrs für Warmwasser steht und dafür gestaltet ist, das Wasser von dem dritten Auslass (9) mit dem Wasser von dem vierten Auslass (11) zu mischen.

8. System (1) nach Anspruch 7, wobei jeder Einlass und jeder Auslass, die in jedem Abschnitt liegen, auf gleicher Höhe liegen.

9. Verfahren zum Erzielen einer Schichtung im Inneren eines Wassertanks (2) eines Systems (1) nach einem der Ansprüche 1 bis 8,
wobei das Verfahren Folgendes umfasst:
einen ersten Heizkreis, wobei der Heizkreis die Extraktion von Kaltwasser vom Boden des Tanks (2), das Erwärmen des Wassers und das Einführen des erwärmten Wassers in den mittleren Abschnitt des Tanks (2) umfasst, wodurch eine Schicht aus Wasser mittlerer Temperatur (14) erzeugt wird, wobei der erste Heizkreis aufrechterhalten wird, bis kein Kaltwasser mehr am Boden des Tanks (2) verblieben ist,
einen zweiten Heizkreis, wobei der Heizkreis die Extraktion von Wasser mittlerer Temperatur aus dem Tank (2), das Erwärmen des Wassers mittlerer Temperatur und das Einführen des erwärmten Wassers in den oberen Abschnitt des Tanks (2) umfasst, wodurch eine Schicht aus Warmwasser (15) erzeugt wird, wobei das Wasser mittlerer Temperatur durch einen Auslass aus dem Tank (2) extrahiert wird, der dem Boden des Tanks (2) oder dem mittleren Abschnitt des Tanks (2) am nächsten liegt.

## Revendications

1. Système (1) approprié pour recevoir, stocker et fournir de l'eau, ledit système (1) comprenant :
un réservoir (2) ayant une première et une deuxième sortie (10, 7) pour fournir de l'eau dans le réservoir (2) à un échangeur de chaleur (12), et une première et une deuxième entrée (7, 5) pour renvoyer l'eau chauffée par l'échangeur de chaleur (12) vers le réservoir (2), et une troisième entrée (3) pour introduire de l'eau du robinet dans le réservoir (2), et une troisième sortie et une quatrième sortie (9, 11) pour fournir de l'eau chaude sanitaire, et configuré pour contenir de l'eau à usage domestique, ledit réservoir (2) comprenant une section inférieure, une section supérieure et une section médiane et configuré pour que la première sortie et la troisième entrée (10, 3) soient situées dans la section inférieure, la première entrée (7), la deuxième sortie (7) et la quatrième sortie (11) soient situées dans la section médiane, et la deuxième entrée (5) et la troisième sortie (9) soient situées dans la section supérieure, et
un échangeur de chaleur (12) pourvu d'une entrée configurée pour recevoir de l'eau dans le réservoir (2) et d'une sortie configurée pour fournir ladite eau au réservoir (2),
un circuit de chauffage configuré pour fournir une connexion fluidique entre la sortie de l'échangeur de chaleur (12) et soit la première entrée, soit la deuxième entrée (7, 5), et configuré pour fournir une connexion fluidique entre l'entrée de l'échangeur de chaleur (12) et soit la première sortie (10), soit la deuxième sortie (7), le système (1), comprenant en outre une pluralité de diffuseurs comprenant un premier diffuseur en forme de bol (4) et un deuxième diffuseur en forme de bol (6), et le premier diffuseur (4) en forme de bol est situé à proximité du fond du réservoir (2) et de telle sorte qu'un côté ouvert du bol soit vers le bas et que la direction axiale du premier diffuseur en forme de bol (4) soit verticale, et le deuxième diffuseur en forme de bol (6) est situé à proximité d'une paroi supérieure du réservoir (2) et de telle sorte qu'un côté ouvert du bol soit vers le haut et que la direction axiale du deuxième diffuseur en forme de bol (6) soit verticale, et le premier diffuseur en forme de bol (4) est disposé sur la troisième entrée (3) et le deuxième diffuseur en forme de bol (6) est disposé dans la deuxième entrée (5).

2. Système (1) selon la revendication 1, ledit circuit de chauffage comprenant en outre une première vanne à 3 voies (20), une deuxième vanne à 3 voies (19) et un tuyau de dérivation (22), dans lequel la première vanne à 3 voies (20) est en communication fluidique avec la première sortie (10), l'entrée de l'échangeur de chaleur (12) et l'une des extrémités du tuyau de dérivation (22), et,
la deuxième vanne à 3 voies (19) est en communication fluidique avec la deuxième entrée (5), la sortie de l'échangeur de chaleur (12) et l'autre extrémité du tuyau de dérivation (22), et,
la deuxième sortie (7) et la première entrée (7) sont en communication fluidique avec le milieu du tuyau de dérivation (22).

3. Système (1) selon la revendication 2, comprenant en outre un contrôleur, ledit contrôleur commandant la première vanne à 3 voies (20) et la deuxième vanne à 3 voies (19).

4. Système (1) selon l'une quelconque des revendications 1 à 3, comprenant en outre un troisième diffuseur (8), et le troisième diffuseur (8) est situé dans la section médiane du réservoir (2) et est disposé sur la première entrée (7) et comprend :
un premier disque pourvu d'une entrée centrale et
un second disque de taille similaire, de préférence de taille égale, destiné à être placé parallèlement au premier disque, lesdits disques étant espacés l'un de l'autre par une pluralité d'entretoises s'étendant vers lesdits disques, et ;
un espace sensiblement cylindrique défini par lesdits disques disposés parallèlement dans lequel s'écoule l'eau admise par l'entrée centrale du premier disque et à partir duquel ladite eau est évacuée radialement par la sortie radiale entre les deux disques ;
**caractérisé en ce qu'**une pluralité d'éléments de déviation disposés parallèlement s'étend verticalement à partir d'un ou des deux disques, lesdits éléments de déviation étant contenus dans l'espace cylindrique entre les disques.

5. Système (1) selon l'une quelconque des revendications 1 à 4, la deuxième sortie (7) et la première entrée (7) sont identiques.

6. Système (1) selon la revendication 5, le troisième diffuseur (8) fonctionne comme une entrée d'eau ou une sortie d'eau.

7. Système (1) selon l'une quelconque des revendications 1 à 6, comprenant en outre
une troisième vanne à 3 voies (21), dans lequel la troisième vanne à 3 voies (21) est en communication fluidique avec la troisième sortie (9), la quatrième sortie (11) et l'extrémité d'un tuyau d'alimentation en eau chaude sanitaire, et est configurée pour mélanger l'eau de la troisième sortie (9) avec l'eau de la quatrième sortie (11).

8. Système (1) selon la revendication 7, dans lequel chaque entrée et sortie situées dans chaque section sont situées à la même hauteur.

9. Procédé pour réaliser une stratification à l'intérieur d'un réservoir d'eau (2) d'un système (1) selon l'une quelconque des revendications 1 à 8,
ledit procédé comprenant :
un premier cycle de chauffage, ledit cycle de chauffage comportant l'extraction d'eau froide du fond du réservoir (2), le chauffage de ladite eau et l'introduction de ladite eau chauffée dans la section médiane du réservoir (2), créant ainsi une couche d'eau à moyenne température (14), le premier cycle de chauffage est maintenu jusqu'à ce qu'il ne reste plus d'eau froide au fond du réservoir (2) ;
un second cycle de chauffage, ledit cycle de chauffage comportant l'extraction de l'eau à moyenne température du réservoir (2), le chauffage de ladite eau à moyenne température et l'introduction de ladite eau chauffée dans la section supérieure du réservoir (2), créant ainsi une couche d'eau chaude (15), l'eau à moyenne température est extraite du réservoir (2) par une sortie située à côté du fond du réservoir (2) ou de la section médiane du réservoir (2).
